(19) Europäisches Patentamt
European Patent Office
Office européen des brevets

(11) **EP 3 467 799 A1**

(12) **EUROPEAN PATENT APPLICATION**

(43) Date of publication:
**10.04.2019 Bulletin 2019/15**

(51) Int Cl.:
**G08G 1/015** (2006.01)     **G08G 1/01** (2006.01)
**G08G 1/123** (2006.01)     **G08G 1/16** (2006.01)

(21) Application number: **18187646.7**

(22) Date of filing: **07.08.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2017  KR 20170124062**

(71) Applicant: **Samsung Electronics Co., Ltd.
Gyeonggi-do 16677 (KR)**

(72) Inventors:
• **Hyun, Yoonsuk**
  **16678 Gyeonggi-do (KR)**
• **Lee, Jaewoo**
  **16678 Gyeonggi-do (KR)**
• **Jang, Cheolhun**
  **16678 Gyeonggi-do (KR)**
• **Ji, Dae Hyun**
  **16678 Gyeonggi-do (KR)**

(74) Representative: **Grootscholten, Johannes A.M. et al
Arnold & Siedsma
Bezuidenhoutseweg 57
2594 AC The Hague (NL)**

(54) **VEHICLE MOVEMENT PREDICTION METHOD AND APPARATUS**

(57)    Disclosed is vehicle movement prediction method and apparatus for identifying a type of a target vehicle traveling in a target lane on a road and generating movement prediction information to predict a movement of the target vehicle based on the type of the target vehicle, wherein the movement is associated with the target lane.

FIG. 2

EP 3 467 799 A1

**Description**

BACKGROUND

1. Field

The following description relates to method and apparatus for predicting a movement of a vehicle.

2. Description of Related Art

To control an autonomous vehicle, a speed of the autonomous vehicle and deciding whether to change lanes of the autonomous vehicle may be determined based on a movement of a nearby vehicle. To determine the movement of the nearby vehicle, information regarding the nearby vehicle, such as, for example, sensor information, directional indicator, orientation of a heading angle of the nearby vehicle, and a trajectory of the nearby vehicle may be desired to be captured. For example, when the autonomous vehicle is to drive straight, enter a left lane, or enter a right lane, a speed of the nearby vehicle and intent of the nearby vehicle to enter a left or right lane may need to be acquired. In this example, a movement of the heading angle or the directional indicator may be recognized to acquire the intent.
When the nearby vehicle suddenly changes a lane or radically reduces the speed, the autonomous vehicle has difficulty in coping with such a sudden movement of the nearby vehicle, which may lead to an accident on a road. Thus, there is a need for obtaining precise and accurate information for predicting a movement of a vehicle.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.
In a first general aspect of the present invention, there is provided a vehicle movement prediction method including identifying a type of a target vehicle traveling in a target lane on a road, and generating movement prediction information to predict a movement of the target vehicle based on the type of the target vehicle, wherein the movement is associated with the target lane.
The method may include acquiring location information associated with the type of the target vehicle, wherein the generating of the movement prediction information may include generating at least one of a lane-change probability or a deceleration probability of the target vehicle based on the type of the target vehicle and the location information.
The lane-change probability may include a probability of the target vehicle changing lanes, and the deceleration probability may include a probability of the target vehicle decelerating.
The lane-change probability may be based on a first probability of the target vehicle travelling in the target lane without changing lanes, a second probability of the target vehicle changing a lane from the target lane to a lane on the right, and a third probability of the target vehicle changing a lane from the target lane to a lane on the left.
The method may include identifying a host lane of a host vehicle and the target lane from one or more lanes of the road, and generating a target speed of the host vehicle based on the target lane, the host lane, the lane-change probability, the deceleration probability, a speed of the target vehicle, and a speed of the host vehicle.
In response to the type of the target vehicle being a bus, the generating of the movement prediction information may include acquiring any one or any combination of bus-only lane information, bus-stop location information, and bus route information of the target vehicle, identifying the target lane from one or more lanes of the road, and generating at least one of a lane-change probability or a deceleration probability of the target vehicle based on the acquired information and the identified target lane.
The generating of the at least one of the lane-change probability or the deceleration probability may include identifying a location of a bus stop at a distance from the target vehicle based on the bus-stop location information, determining a lane-change direction of the target vehicle based on the identified location and the identified target lane, generating the lane-change probability corresponding to the lane-change direction based on a distance from the target vehicle to the bus stop and the identified target lane, and generating the deceleration probability of the target vehicle based on the distance from the target vehicle to the bus stop.
The generating of the at least one of the lane-change probability or the deceleration probability may include predicting whether the target vehicle will turn at a crossroad connected to the road based on the bus route information, determining a lane-change direction of the target vehicle based on a result of the predicting and the identified target lane, and generating the lane-change probability corresponding to the lane-change direction based on a distance from the target vehicle to the crossroad and the identified target lane.
The generating of the at least one of the lane-change probability or the deceleration probability may include identifying a bus-only lane at a distance from a location of the target vehicle based on the bus-only lane information, determining a lane-change direction of the target vehicle based on the identified bus-only lane and the identified target lane, and generating the lane-change probability corresponding to the lane-change direction based on a distance from the target vehicle to the bus-only lane and the identified target lane.

The identifying of the bus-only lane may include determining whether the bus-only lane is in operation based on operation hours of the bus-only lane.

The generating of the movement prediction information may include determining whether the target vehicle may be allowed to pick up and drop off passengers or stop based on the type of the road, and generating at least one of a lane-change probability or a deceleration probability of the target vehicle based on a result of the determining.

In response to the type of the target vehicle being a taxi, the generating of the at least one of the lane-change probability or the deceleration probability may include determining a number of times that passengers get on and off the taxi on the road, identifying the target lane from one or more lanes of the road, determining a lane-change direction of the taxi changing lanes to pick up or drop off passengers based on the identified target lane, generating the lane-change probability corresponding to the lane-change direction based on the number of times and the identified target lane, and generating the deceleration probability of the target vehicle based on the number of times.

The determining of the number of times may include determining whether the road may be an in-city road, a road in a commercial area, or a highway.

In response to the type of the target vehicle being a commuter vehicle, the generating of at least one of the lane-change probability or the deceleration probability may include determining a number of times that passengers get on and off the commuter vehicle on the road, identifying the target lane from one or more lanes of the road, determining a lane-change direction of the commuter vehicle changing lanes to pick up or drop off passengers based on the identified target lane, generating the lane-change probability corresponding to the lane-change direction based on the number of times and the identified target lane, and generating the deceleration probability of the target vehicle based on the number of times.

The determining of the number of times may include determining whether the road may be in a residential area or a road with restrictions due to the presence of children.

In response to the type of the target vehicle being a garbage truck, the generating of at least one of the lane-change probability or the deceleration probability may include determining a number of times that the garbage truck stops on the road, identifying the target lane from the one or more lanes of the road, determining a lane-change direction of the garbage truck stopping based on the identified target lane, generating the lane-change probability corresponding to the lane-change direction based on the number of times and the identified target lane, and generating the deceleration probability of the target vehicle based on the number of times.

The determining of the number of times may include determining whether the road may be in a residential area or a road in a commercial area.

According to a second aspect of the present invention, there is provided a vehicle movement prediction apparatus including a processor configured to identify a type of a target vehicle traveling in a target lane on a road, and to generate movement prediction information to predict a movement of the target vehicle based on the type of the target vehicle, wherein the movement is associated with the target lane.

The processor may be configured to acquire location information associated with the type of the target vehicle, and to generate at least one of a lane-change probability or a deceleration probability based on the type of the target vehicle and the location information.

The processor may be configured to identify a host lane of a host vehicle and the target lane from one or more lanes of the road, and generate a target speed of the host vehicle based on the target lane, the host lane, the lane-change probability, the deceleration probability, a speed of the target vehicle, and a speed of the host vehicle.

In response to the type of the target vehicle being a bus, the processor may be configured to acquire any one or any combination of bus-only lane information, bus-stop location information, and bus route information of the target vehicle, identify the target lane from one or more lanes of the road, and generate at least one of a lane-change probability or a deceleration probability of the target vehicle based on the acquired information and the identified target lane.

The processor may be configured to determine whether the target vehicle is allowed to pick up and drop off passengers or stop based on the type of the road, and generate at least one of a lane-change probability or a deceleration probability of the target vehicle based on a result of the determining.

In response to the type of the target vehicle being a taxi, the processor may be configured to determine a number of times that passengers get on and off the taxi on the road, identify the target lane from one or more lanes of the road, determine a lane-change direction of the taxi changing lanes to pick up or drop off passengers based on the identified target lane, generate the lane-change probability corresponding to the lane-change direction based on the number of times and the identified target lane, and generate the deceleration probability of the target vehicle based on the number of times.

In response to the type of the target vehicle being a commuter vehicle, the processor may be configured to determine a number of times that passengers get on and off the commuter vehicle on the road, identify the target lane from one or more lanes of the road, determine a lane-change direction of the commuter vehicle changing lanes to pick up or drop off passengers based on the identified target lane, generate the lane-change probability corresponding to the lane-change direction based on the number of times and the identified target lane, and generate the deceleration probability of the target vehicle based on the number of times.

In response to the type of the target vehicle being a garbage truck, the processor may be configured to determine a number of times that the garbage truck stops on the road, identify the target lane from one or more lanes of the road, determine a lane-change direction of the garbage truck stopping based on the identified target lane, generate the lane-change probability corresponding to the lane-change direction based on the number of times and the identified target lane, and generate the deceleration probability of the target vehicle based on the number of times.

According to a third aspect of the present invention, there is provided a vehicle movement prediction apparatus including one or more sensor configured to detect information regarding a target vehicle a head-up display (HUD), and a processor configured to recognize the target vehicle based on information acquired from the one or more sensors, identify a type of the target vehicle, and to determine whether the identified type is defined, predict a movement of the target vehicle based on the location information of the target vehicle, in response to the identified type of the target vehicle being defined, control a movement of a host vehicle based on a location of the host vehicle and the predicted movement of the target vehicle, and output the predicted movement of the target vehicle and the movement of the host vehicle through the HUD.

The vehicle movement prediction apparatus may include a memory configured to store information detected by the sensor and location information received from a server.

Other features and aspects will be apparent from the following detailed description, the drawings, and the claims.

BRIEF DESCRIPTION OF THE DRAWINGS

FIG. 1 illustrates an example of a vehicle movement prediction method.

FIG. 2 illustrates an example of a vehicle movement prediction method.

FIG. 3 illustrates an example of a vehicle movement prediction method.

FIG. 4 illustrates an example of a vehicle movement prediction method.

FIG. 5 illustrates an example of a vehicle movement prediction method.

FIG. 6 illustrates an example of a vehicle movement prediction method.

FIG. 7 illustrates an example of a vehicle movement prediction apparatus.

FIG. 8 illustrates an example of an operation of a vehicle movement prediction apparatus.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when an element, such as a layer, region, or substrate, is described as being "on," "connected to," or "coupled to" another element, it may be directly "on," "connected to," or "coupled to" the other element, or there may be one or more other elements intervening there between. In contrast, when an element is described as being "directly on," "directly connected to," or "directly coupled to" another element, there can be no other elements intervening there between.

The terminology used herein is for describing various examples only, and is not to be used to limit the disclosure. The articles "a," "an," and "the" are intended to include the plural forms as well, unless the context clearly indicates otherwise.

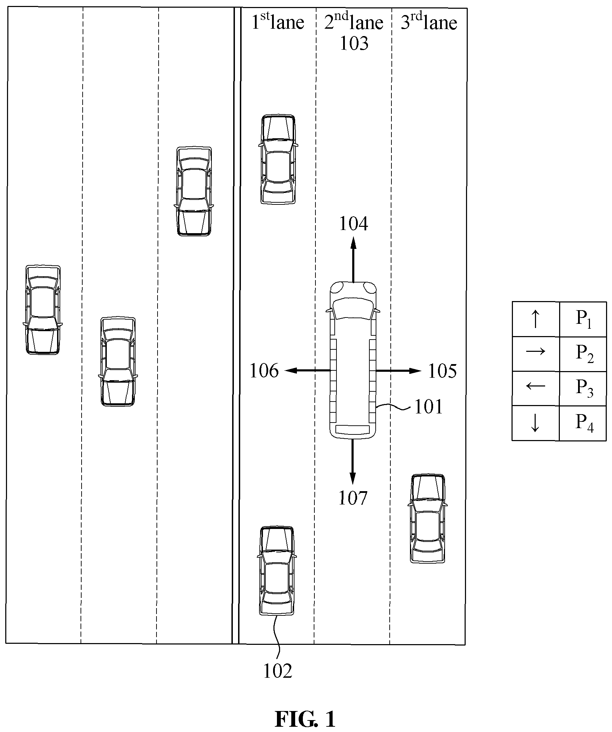

FIG. 1 illustrates an example of a vehicle movement prediction method.

In an example, a vehicle movement prediction apparatus is implemented as, for example, a hardware module. The vehicle movement prediction apparatus generates movement prediction information used for predicting a movement of a target vehicle 101. The target vehicle 101 is a vehicle corresponding to a target of movement prediction.

In an example, the vehicle described herein refers to any mode of transportation, delivery, or communication such as, for example, an automobile, a truck, a tractor, a scooter, a motorcycle, a cycle, an amphibious vehicle, a snowmobile, a boat, a public transit vehicle, a bus, a monorail, a train, a tram, an autonomous or automated driving vehicle, an intelligent vehicle, a self-driving vehicle, an unmanned aerial vehicle, an electric vehicle (EV), a hybrid vehicle, a smart mobility, or a drone. In an example, smart mobility may include mobility devices such as, for example, electric wheels, an electric kickboard, and an electric bike.

In an example, the vehicle movement prediction apparatus is incorporated in various types of mobile terminals that are operatively connected to the vehicle. In an example the mobile terminals include devices such as, for example, an intelligent agent, a mobile phone, a cellular phone, a smart phone, a wearable smart device (such as, a ring, a watch, a pair of glasses, glasses-type device, a bracelet, an ankle bracket, a belt, a necklace, an earring, a headband, a helmet, a device embedded in the cloths, or an eye glass display (EGD)), a server, a personal computer (PC), a laptop, a notebook, a subnotebook, a netbook, an ultra-mobile PC (UMPC), a tablet personal computer (tablet), a phablet, a mobile internet device (MID), a personal digital assistant (PDA), an enterprise digital assistant (EDA), a digital camera, a digital video camera, a portable game console, an MP3 player, a portable/personal multimedia player (PMP), a handheld e-book, an ultra mobile personal computer (UMPC), a portable lab-top PC, a global positioning system (GPS) navigation, a personal navigation device, portable navigation device (PND), a handheld game console, an e-book, a high definition television (HDTV), a smart appliance, communication systems, image processing systems, graphics processing systems, various Internet of Things (IoT) devices that are controlled through a network, other consumer electronics/information technology(CE/IT) device, or any other device capable of wireless communication or network communication consistent with that disclosed herein.

The vehicle movement prediction apparatus is mounted on a host vehicle 102 or located external to the host vehicle 102 to provide information to the host vehicle 102. The vehicle movement prediction apparatus predicts movements of vehicles nearby the host vehicle 102 and generates information that is used to control the host vehicle 102. The vehicle movement prediction apparatus collects, processes, stores, or transmits information or commands associated with driving of the host vehicle 102, or controls the host vehicle 102 locally or remotely. The host vehicle 102 is, for example, a vehicle corresponding to a target to be controlled by the vehicle movement prediction apparatus.

The vehicle movement prediction apparatus is included in a driving assistance apparatus of the host vehicle 102 or an autonomous driving control apparatus of the host vehicle 102. The driving assistance apparatus and the autonomous driving control apparatus are an apparatus for assisting the host vehicle 102 in driving and an apparatus for controlling autonomous driving of the host vehicle. The driving assistance apparatus or the autonomous driving control apparatus is included in the host vehicle 102 or implemented as an external server.

Referring to FIG. 1, the vehicle movement prediction apparatus senses the target vehicle 101 corresponding to a nearby vehicle of the host vehicle 102 and recognizes information associated with the target vehicle 101 to predict a movement of the target vehicle 101. The nearby vehicle of the host vehicle 102 is a vehicle nearby the host vehicle 102 and includes, for example, a vehicle located in a range defined based on a location of the host vehicle 102.

The vehicle movement prediction apparatus predicts a movement of the target vehicle 101 in association with a lane based on a type and location information of the target vehicle 101.

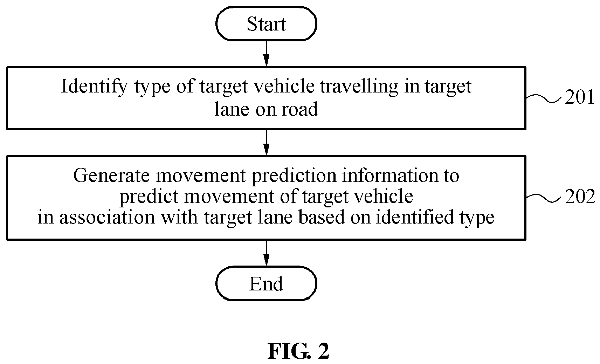

FIG. 2 illustrates an example of a vehicle movement prediction method. The operations in FIG. 2 may be performed in the sequence and manner as shown, although the order of some operations may be changed or some of the operations omitted without departing from the scope of the illustrative examples described. Many of the operations shown in FIG. 2 may be performed in parallel or concurrently. One or more blocks of FIG. 2, and combinations of the blocks, can be implemented by special purpose hardware-based computer that perform the specified functions, or combinations of special purpose hardware and computer instructions. In addition to the description of FIG. 2 below, the descriptions of FIG. 1 are also applicable to FIG. 2, and are incorporated herein by reference. Thus, the above description is not be repeated here.

In operation 201, a vehicle movement prediction apparatus identifies a type of the target vehicle 101 travelling in a target lane 103 on a road including at least one lane. A type of the target vehicle 101 is a category into which a vehicle is classified and includes categories, such as, for example, a bus, a taxi, and a commuter vehicle.

In an example, the vehicle movement prediction apparatus analyzes a feature of the target vehicle 101 based on information acquired using sensor or camera of the host vehicle 102, information collected from the target vehicle 101 through short range communication, information acquired from a memory of the host vehicle 102 or an external server, or external sensor or camera. The external server includes, for example, a server provided in a form of an open cloud with modifiable and editable access and a cloud with limited access.

The vehicle movement prediction apparatus recognizes the target vehicle 101 and the target lane 103 in which the target vehicle 101 is travelling. The vehicle movement prediction apparatus identifies the target lane 103 including the target vehicle 101 from lanes of a road on which the target vehicle 101 is travelling.

The vehicle movement prediction apparatus senses nearby vehicles of the host vehicle 102, for example, vehicles ahead, behind, and at both sides of the host vehicle 102, recognizes the target vehicle 101 based on information collected from a sensor, a camera, or an external server, and stores a result of the recognition. The vehicle movement prediction apparatus identifies the type of the target vehicle 101 or the target lane 103 based on the information collected from a sensor, a camera, or an external server, or acquires a type of the target vehicle 101 and an identification result of the target lane 103. For example, the vehicle movement prediction apparatus acquires an image of the target vehicle 101 using a sensor or a camera mounted on the host vehicle 102 and identifies the type of the target vehicle 101 and the target lane 103 based on the acquired image.

The vehicle movement prediction apparatus identifies a lane of the host vehicle 102 or acquires an identification of the lane of the host vehicle 102. The vehicle movement prediction apparatus senses or acquires a speed of the host vehicle 102 and a speed of the target vehicle 101. An operation of identifying the type of the target vehicle 101, the target lane 103, and a lane of the host vehicle 102 or sensing the speed of the target vehicle 101 and the speed of the host vehicle 102 is not limited to the foregoing examples and various methods can be used without departing from the scope of the illustrative examples described.

In operation 202, the vehicle movement prediction apparatus generates movement prediction information used for predicting a movement of the target vehicle 101 based on the type of the target vehicle 101. The movement of the target vehicle 101 is a movement associated with the target lane 103 and includes movements such as, for example, a movement of the target vehicle 101 changing a lane from the target lane 103, a movement of the target vehicle 101 travelling in the target lane 103 without changing lanes, and a movement of the target vehicle 101 accelerating or decelerating in the target lane 103.

In an example, the vehicle movement prediction apparatus acquires location information associated with the type of the target vehicle 101 and generates the movement prediction information of the target vehicle 101 based on the type and the location information of the target vehicle 101. In an example, the location information associated with the type of the target vehicle 101 is location information used for driving of the target vehicle 101 based on the type of the target vehicle 101. For example, when the type of the target vehicle 101 is a bus, the location information includes bus-only lane information, bus route information, and bus-stop location information. The location information includes a location of the target vehicle 101, characteristics of a road on which the target vehicle 101 is located, and information on a lane for driving of the target vehicle 101.

The vehicle movement prediction apparatus generates a lane-change probability and a deceleration probability of the target vehicle 101 based on the type of the target vehicle 101 and the location of the target vehicle 101. The lane-change probability indicates a probability of the target vehicle 101 changing lanes. The deceleration probability indicates a probability of the target vehicle 101 decelerating.

Referring to FIG. 1, the vehicle movement prediction apparatus calculates a probability $p_1$ 104 of the target vehicle 101 going straight, a probability $p_2$ 105 of the target vehicle 101 changing lanes to the right, a probability $p_3$ 106 of the target vehicle 101 changing lanes to the left, and a probability $p_4$ 107 of the target vehicle 101 decelerating. In an example, one or more of these probabilities are calculated based on the type of the target vehicle 101 and the location information of the target vehicle 101.

The probability $p_1$ 104 indicates a probability of the target vehicle 101 travelling in the target lane 103 without changing lanes. The probability $p_2$ 105 indicates a probability of the target vehicle 101 changing a lane from the target lane 103 to a right lane, for example, a third lane. The probability $p_3$ 106 indicates a probability of the target vehicle 101 changing a lane from the target lane 103 to a left lane, for example, a first lane. Since the movement of the target vehicle 101 associated with the lane is classified as one of two scenarios including a lane maintenance and a lane change, a sum of the probability $p_1$ 104, the probability $p_2$ 105, and the probability $p_3$ 106 is "1". The probability $p_4$ 107 is a probability associated with whether a deceleration occurs and thus, corresponds to a value between "0" and "1".

In an example, the vehicle movement prediction apparatus generates the lane-change probability and the deceleration probability of the target vehicle 101 based on the type of the target vehicle 101 and the location information of the target vehicle 101 and predicts the movement of the target vehicle 101 based on the generated probabilities. The lane-change probability and the deceleration probability are applied to predict the movement of the target vehicle 101 and used to adjust a lane-change probability and a deceleration probability predicted in advance.

In an example, the vehicle movement prediction apparatus identifies a host lane, for example, the first lane of the host vehicle 102 and the target lane 103 of the target vehicle 101 to control the host vehicle 102. In an example, the vehicle movement prediction apparatus generates a target speed of the host vehicle 102 based on one or more of the target lane 103, the host lane, the probability $p_1$ 104, the probability $p_2$ 105, the probability $p_3$ 106, the probability $p_4$ 107, a speed of the target vehicle 101, and a speed of the host vehicle 102. The vehicle movement prediction apparatus controls the speed of the host vehicle 102 based on the generated target speed.

In an example, the vehicle movement prediction apparatus determines whether the host vehicle 102 is to change lanes based on the target lane 103, the host lane, the probability $p_1$ 104, the probability $p_2$ 105, the probability $p_3$ 106, the probability $p_4$ 107, a speed of the target vehicle 101, and a speed of the host vehicle 102. The vehicle movement prediction apparatus controls driving of the host vehicle 102 based on a result of determining whether the host vehicle 102 changes lanes.

Driving of the host vehicle 102 is controlled based on recognized information associated with, for example, a speed, a trajectory, and a direction indicator of a nearby vehicle. There may be difficulties in controlling the host vehicle when the nearby vehicle unpredictably changes lanes or suddenly decelerates. For example, when the driving of the host vehicle 102 is controlled using only the direction indicator of the nearby vehicle, a risk of collision may be relatively high because a bus or a taxi frequently changes lanes or decelerates.

In an example, the vehicle movement prediction apparatus predicts the movement of the target vehicle 101 and adjusts the lane-change probability and the deceleration probability of the target vehicle 101 based on the type of the target vehicle 101 and the location information associated with the type of the target vehicle 101, thereby reducing a risk of accident occurring due to a sudden lane change or deceleration. The vehicle movement prediction apparatus controls the driving of the host vehicle 102 in when the target vehicle 101 suddenly changing lanes or decelerating.

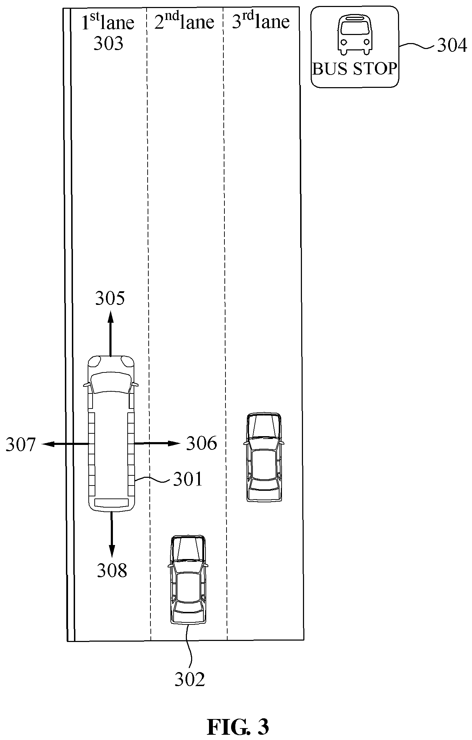

FIG. 3 illustrates an example of a method for vehicle movement prediction.

Referring to FIG. 3, a vehicle movement prediction apparatus recognizes a target vehicle 301 nearby a host vehicle 302. In an example, the vehicle movement prediction apparatus determines whether a type of the target vehicle 301 is a bus.

In an example, the vehicle movement prediction apparatus analyzes an image of the target vehicle 301 to determine that the type of the target vehicle 301 is the bus. When the type of the target vehicle 301 is the bus, the vehicle movement prediction apparatus recognizes a bus route number and acquires any one or any combination of bus-only lane information, bus route information, and bus-stop location information.

In an example, the vehicle movement prediction apparatus identifies a target lane 303 of the target vehicle 301. In an example, the vehicle movement prediction apparatus generates at least one of a lane-change probability and a deceleration probability of the target vehicle 301 based on the target lane 303 and at least one item of information acquired from the bus-only lane information, the bus route information, and the bus-stop location information.

The vehicle movement prediction apparatus identifies a location of a bus stop 304 at a distance from the target vehicle 301 based on the bus-stop location information. The bus-stop location information is, for example, information on a map representing the location of the bus stop 304 corresponding to the bus route number of the target vehicle 301. The vehicle movement prediction apparatus acquires the location of the bus stop 304 and a path corresponding to a bus route of the target vehicle 301 and determines a relationship between a current location of the target vehicle 301 and the location of the bus stop 304.

The vehicle movement prediction apparatus determines a lane-change direction of the target vehicle 301 based on the location of the bus stop 304 and the target lane 303. For example, the target lane 303 is a first lane. Also, the bus stop 304 is on a side walk next to a third lane that is at the distance from the target vehicle 301. In this example, the vehicle movement prediction apparatus determines that the lane-change direction of the target vehicle 301 is a rightward direction.

The vehicle movement prediction apparatus generates a lane-change probability corresponding to the lane-change direction based on a distance from the target vehicle 301 to the bus stop 304 and position of the target lane 303. The vehicle movement prediction apparatus generates a deceleration probability of the target vehicle 301 based on the distance from the target vehicle 301 to the bus stop 304.

The vehicle movement prediction apparatus generates a probability $p_0$ 305 of the target vehicle 301 going

straight, a probability $p_2$ 306 of the target vehicle 301 changing lanes to the right, a probability $p_1$ 307 of the target vehicle 301 changing lanes to the left, and a probability q 308 of the target vehicle 301 decelerating by acquiring information as shown in Table 1.

[Table 1]

| Information | Value |
|---|---|
| Bus speed $v_b$ | 60 km/h |
| Bus lane number $i_b$ | 1 |
| Host vehicle speed $v_e$ | 70 km/h |
| Host vehicle lane number $i_e$ | 2 |
| Total number of lanes n | 3 |
| Distance from bus to bus stop d | 50 m |

The vehicle movement prediction apparatus calculates the lane-change probability and the deceleration probability of the target vehicle 301 based on the acquired information. When the lane-change direction is the rightward direction, the vehicle movement prediction apparatus sets the probability $p_1$ 307 of the target vehicle 301 changing lanes to the left to be "0". Since a sum of the probability $p_0$ 305 of the target vehicle 301 going straight, the probability $p_2$ 306 of the target vehicle 301 changing lanes to the right, and the probability $p_1$ 307 of the target vehicle 301 changing lanes to the left is "1", the vehicle movement prediction apparatus generates a relationship among the probability $p_0$ 305, the probability $p_1$ 307, and the probability $p_2$ 306 using Equation 1.

[Equation 1]

$$p_0 = 1 - p_2 , \quad p_1 = 0$$

The vehicle movement prediction apparatus calculates the probability $p_2$ 306.

[Equation 2]

$$p_2 = \max\{0, \frac{(100-d)(n-i_B)}{200}\}$$

In Equation 2, a function max{} is used to prevent the probability $p_2$ 306 from being calculated as a negative number. According to Equation 2, the vehicle movement prediction apparatus uses a probability model in which the probability $p_2$ 306 increases according to a decrease in a distance from the target vehicle 301 to the bus stop 304 and the probability $p_2$ 306 increases according to an increase in a distance from the target lane 303 to the bus stop 304. In Equation 2, d is the distance from the target vehicle 301 to the bus stop 304, n is the number of lanes and $i_B$ is the number of the lane for the target vehicle 301.

The vehicle movement prediction apparatus calculates the probability q 308 of the target vehicle 301 decelerating using Equation 3.

[Equation 3]

$$q = \max\{0, \frac{(100-d)}{200}\}$$

In Equation 3, the function max{ } is used to prevent the probability q 308 from being calculated as a negative number. According to Equation 3, the vehicle movement prediction apparatus uses a probability model in which the probability q 308 increases according to a decrease in the distance from the target vehicle 301 to the bus stop 304.

The vehicle movement prediction apparatus generates the probability $p_0$ 305, the probability $p_1$ 307, the probability $p_2$ 306, and the probability q 308 using Equations 1 through 3 as shown in Table 2.

[Table 2]

| Probability | Value |
| --- | --- |
| $p_0$ | 0.5 |
| $p_1$ | 0.0 |
| $p_2$ | 0.5 |
| q | 0.25 |

The vehicle movement prediction apparatus generates a target speed of the host vehicle 302 based on the target lane 303, the lane-change probability, the deceleration probability, and a speed of the target vehicle 301, and a lane and a speed of the host vehicle 302. The vehicle movement prediction apparatus calculates the target speed of the host vehicle 302 using Equation 4.

[Equation 4]

$$\text{Target speed} = (1 - p_2)v_E + p_2((1 - q)v_B)$$

In Equation 4, $V_E$ is the speed of the host vehicle 302 and $V_B$ is the speed of the target vehicle 301. Since the target vehicle 301 is located in a lane on the left of the host vehicle 302, the vehicle movement prediction apparatus uses a model in which the target speed of the host vehicle 302 is adjusted based on a reduced speed of the target vehicle 301 in response to the probability $p_2$ 306 and the probability q 308 increasing according to Equation 4.

The models described with reference to Tables 1 and 2 and Equations 1 through 4 are merely an example and thus, various schemes using the target lane 303 and the location information associated with the type of the target vehicle 301 are applicable to predict the movement of the target vehicle 301 in the vehicle movement prediction apparatus.

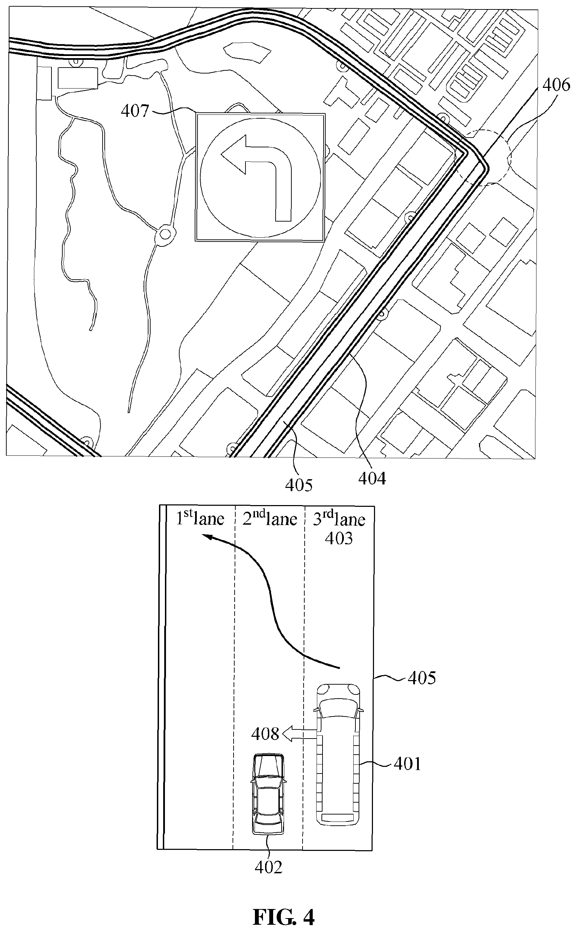

FIG. 4 illustrates an example of a vehicle movement prediction method.

Referring to FIG. 4, a vehicle movement prediction apparatus recognizes a target vehicle 401 nearby a host vehicle 402 and determines that a type of the target vehicle 401 is a bus. The vehicle movement prediction apparatus identifies a target lane 403 of the target vehicle 401 from lanes of a road 405 and acquires bus route information 404 of the target vehicle 401.

The vehicle movement prediction apparatus predicts whether the target vehicle 401 is to turn left or right at an intersection 406 connected to the road 405 based on the bus route information 404. For example, the vehicle movement prediction apparatus predicts a left turn 407 of the target vehicle 401 at the intersection 406.

The vehicle movement prediction apparatus determines a lane-change direction of the target vehicle 401 based on a prediction result of whether the target vehicle 401 turns left or right and the target lane 403. For example, the vehicle movement prediction apparatus predicts the left turn 407 of the target vehicle 401 at the intersection 406. Also, the target lane 403 is a third lane. Thus, the vehicle movement prediction apparatus determines that the lane-change direction of the target vehicle 401 is a leftward direction.

The vehicle movement prediction apparatus generates a lane-change probability 408 corresponding to the leftward direction that is the lane-change direction based on a distance from the target vehicle 401 to the intersection 406 and the target lane 403. The vehicle movement prediction apparatus calculates the lane-change probability 408 using a probability model in which the lane-change probability 408 increases according to a decrease in the distance from the target vehicle 401 to the intersection 406 and the lane-change probability 408 increases according to an increase in a distance from the target lane 403 to a left-turn lane.

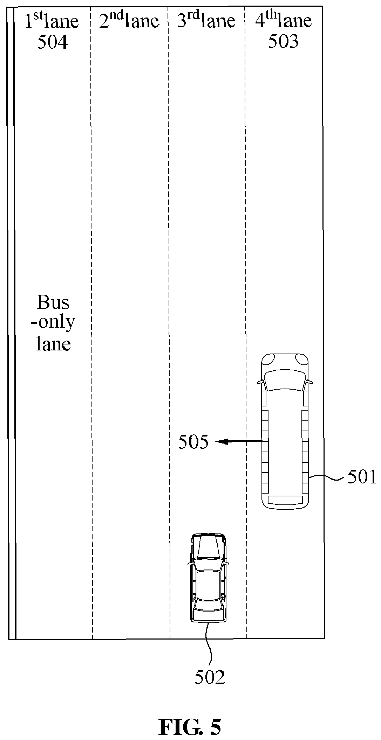

FIG. 5 illustrates an example of a vehicle movement prediction method.

Referring to FIG. 5, a vehicle movement prediction apparatus recognizes a target vehicle 501 nearby a host vehicle 502 and determines that a type of the target vehicle 501 is a bus. The vehicle movement prediction apparatus identifies a target lane 503 of the target vehicle 501 from lanes of a road and acquires bus-only lane information of the target vehicle 501.

The vehicle movement prediction apparatus determines whether a road on which the target vehicle 501 is located or a road at the destination of the target vehicle 501 has the bus-only lane 504 based on the bus-only lane information. The vehicle movement prediction apparatus identifies that the bus-only lane 504 is at a distance from the target vehicle 501.

The vehicle movement prediction apparatus determines operation hours of the bus-only lane 504 based on the bus-only lane information and determines whether the bus-only lane 504 is in operation based on the operation house of the bus-only lane 504. When the bus-only lane 504 is in operation, the vehicle movement prediction apparatus identifies the bus-only lane 504.

The vehicle movement prediction apparatus determines a lane-change direction of the target vehicle 501 based on the bus-only lane 504 and the target lane 503. For example, the target lane 503 is a fourth lane and the bus-only lane 504 is a first lane. In this example, the vehicle movement prediction apparatus determines that the lane-change direction of the target vehicle 501 is a leftward direction.

The vehicle movement prediction apparatus generates a lane-change probability 505 corresponding to the lane-change direction based on a distance from the target vehicle 501 to the bus-only lane 504 and the target lane 503. The distance from the target vehicle 501 to the bus-only lane 504 is, for example, a distance from a road on which the target vehicle 501 is travelling to a road at which the bus-only lane 504 starts. When the road on which the target vehicle 501 is travelling includes the bus-only lane 504, the distance from the target vehicle 501 to the bus-only lane 504 is "0".

The vehicle movement prediction apparatus calculates the lane-change probability 505 using a probability model in which the lane-change probability 505 increases according to a decrease in the distance from the target vehicle 501 to the bus-only lane 504 and the lane-change probability 505 increases according to an increase in the distance from the target lane 503 to the bus-only lane 504.

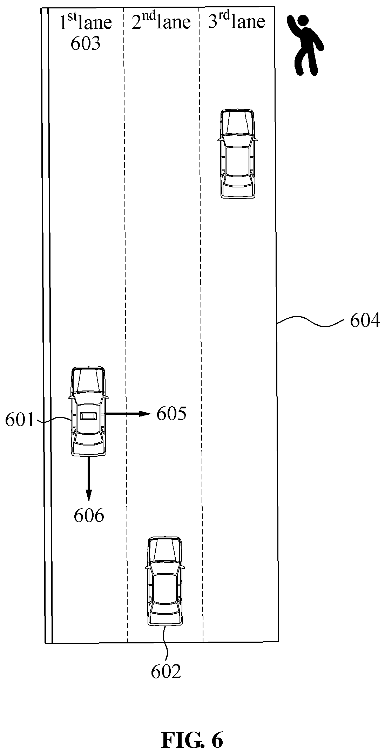

FIG. 6 illustrates an example of a method for vehicle movement prediction.

Referring to FIG. 6, a vehicle movement prediction apparatus recognizes a target vehicle 601 nearby a host vehicle 602 and determines a type of the target vehicle 601. The vehicle movement prediction apparatus determines whether the target vehicle 601 is allowed to pick up and drop off passengers or is allowed to stop on the road 604 based on the type of the target vehicle 601. The road 604 is, for example, a road on which the target vehicle 601 is travelling. The vehicle movement prediction apparatus generates at least one of a lane-change probability and a deceleration probability of the target vehicle 601 based on a result of the determination.

In an example, the vehicle movement prediction apparatus identifies a target lane 603 along which the target vehicle 601 is travelling from lanes of the road 604 and determines that the type of the target vehicle 601 is a taxi. When the type of the target vehicle 601 is the taxi, the vehicle movement prediction apparatus determines a number of times that passengers get on and off the taxi on the road 604. In an example, the vehicle movement prediction apparatus determined the number of times that passengers get on and off the taxi based on the type of the road. For example, the vehicle movement prediction apparatus determines whether the road 604 is an in-city road, a road in a commercial area, or a highway. The vehicle movement prediction apparatus identifies the road 604 based on a location of the road 604 and acquires the number of times that passengers get on and off the taxi on the road 604 based on the identified road 604.

The vehicle movement prediction apparatus determines a lane-change direction of the taxi changing lanes to pick up or drop off passengers based on the identified target lane 603. In the example of FIG. 6, the target lane 603 is a first lane and the passengers get on and off the taxi at a side walk next to a third lane. Thus, the vehicle movement prediction apparatus determines that the lane-change direction of the target vehicle 601 is a rightward direction.

The vehicle movement prediction apparatus generates a lane-change probability 606 corresponding to the lane-change direction based on the number of times that passengers get on and off and the target lane 603. The vehicle movement prediction apparatus generates a deceleration probability 606 of the target vehicle 601 based on the number of times that passengers get on and off.

The vehicle movement prediction apparatus calculates the lane-change probability 605 using a probability model in which the lane-change probability 606 and the deceleration probability 606 increase according to an increase in the number of times that passengers get on and off and the lane-change probability 606 increases according to an increase in a distance from the target lane 603 to a lane in which the passengers get on and off the taxi.

When the road 604 is the in-city road, the vehicle movement prediction apparatus generates a lane-change probability of the target vehicle 601 as shown in Table 3.

[Table 3]

| Probability | Value |
|---|---|
| Probability $p_0$ of going straight | 0.9 |
| Probability $p_1$ of changing lanes to the left | 0.0 |
| Probability $p_2$ of changing lanes to the right | 0.1 |

When the road 604 is the road in a commercial area, the vehicle movement prediction apparatus generates a lane-change probability and a deceleration probability of the target vehicle 601 as shown in Table 4.

[Table 4]

| Probability | Value |
|---|---|
| Probability $p_0$ of going straight | 0.8 |
| Probability $p_1$ of changing lanes to the left | 0.0 |
| Probability $p_2$ of changing lanes to the right | 0.2 |

When the road 604 is the highway, the vehicle movement prediction apparatus generates a lane-change probability and a deceleration probability of the target vehicle 601 as shown in Table 5.

[Table 5]

| Probability | Value |
|---|---|
| Probability $p_0$ of going straight | 1.0 |
| Probability $p_1$ of changing lanes to the left | 0.0 |
| Probability $p_2$ of changing lanes to the right | 0.0 |

Although not shown, the vehicle movement prediction apparatus determines whether a type of a target vehicle is a commuter vehicle. When the type of the target vehicle is the commuter vehicle, the vehicle movement prediction apparatus determines a number of times that passengers get on and off the commuter vehicle on a road on which the target vehicle is travelling. For example, the vehicle movement prediction apparatus determines whether the road on which the target vehicle is travelling is a road in a residential area or a road having restrictions due to the presence of children and determines the number of times that passengers get on and off the commute vehicle on the road. A number of times that passengers get on and off the commute vehicle on the road in a residential area or the road with restrictions due to the presence of children may be greater than a number of times that passengers get on and off the commute vehicle on a general road or on a highway.

The vehicle movement prediction apparatus identifies a target lane of the target vehicle on the road and determines a lane-change direction of the commuter vehicle changing lanes to pick up or drop off passengers based on the identified target lane. The vehicle movement prediction apparatus generates a lane-change probability corresponding to the lane-change direction based on the number of times that passengers get on and off the commute vehicle based on the type of road and the target lane. The vehicle movement prediction apparatus generates a deceleration probability of the target vehicle based on the number of times that passengers get on and off the commute vehicle on the road.

The vehicle movement prediction apparatus calculates the lane-change probability using a probability model in which the lane-change probability and the deceleration probability increase according to an increase in the number of times that passengers get on and off and the lane-change probability increases according to an increase in a distance from the lane of the target vehicle 601 to the lane in which passengers get on and off the commuter vehicle.

Although not shown, in an example, the vehicle movement prediction apparatus determines whether a type of a target vehicle is a garbage truck. When the type of the target vehicle is the garbage truck, the vehicle movement prediction apparatus determines a number of times that the garbage truck stops on a road on which the target vehicle is travelling. For example, the vehicle movement prediction apparatus determines whether the road is a road in a residential area or a road in a commercial area and determines the number of times the garbage truck may stop. A number of times that the garbage truck stops on the residential area or the road in a commercial area may be greater than a number of times that the garbage truck stops on a general road or on a highway.

The vehicle movement prediction apparatus identifies a target lane of the target vehicle on the road and determines a lane-change direction of the garbage truck stopping based on the identified target lane. The vehicle movement prediction apparatus generates a lane-change probability corresponding to the lane-change direction based on the number of times that the garbage truck stops on the road and the target lane. The vehicle movement prediction apparatus generates a deceleration probability of the target vehicle based on the number of times that the garbage truck stops on the road.

The vehicle movement prediction apparatus calculates the lane-change probability using a probability model in which the lane-change probability and the deceleration probability increase according to an increase in the number of times that the garbage truck stops on the road and the lane-change probability increases according to an increase in a distance from the target lane to a lane in which the garbage truck stops.

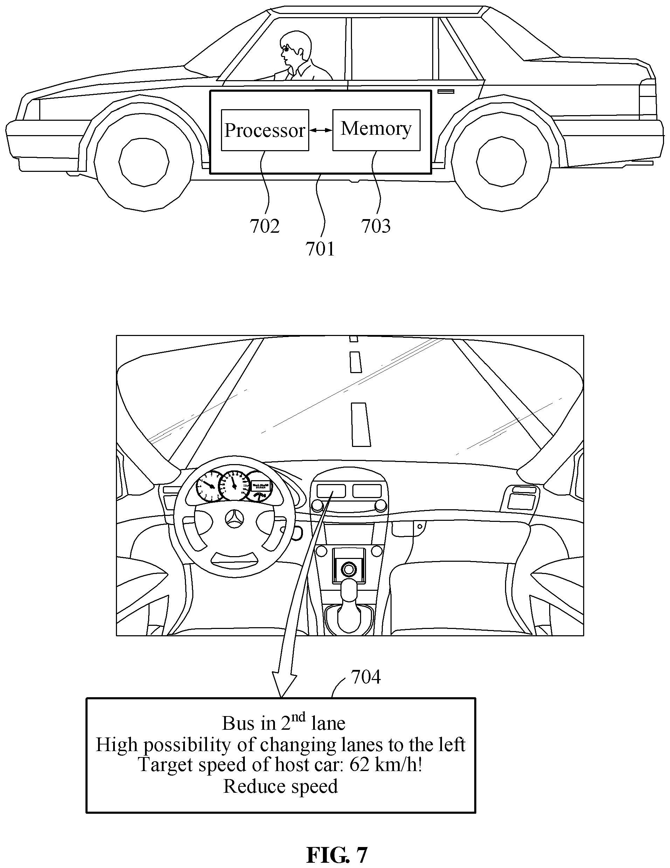

FIG. 7 illustrates an example of a vehicle movement prediction apparatus.

Referring to FIG. 7, a vehicle movement prediction apparatus 701 includes a processor 702 and a memory 703. The vehicle movement prediction apparatus 701 may be mounted on a vehicle or provided external to a vehicle to communicate with the vehicle.

In the memory 703, a program for processing commands associated with vehicle movement prediction is recorded and commands for executing operations described with reference to FIGS. 1 through 6 are also recorded. In an example, the memory 703 stores information sensed by a sensor or a camera of a host vehicle and information received from a server.

The processor 702 loads the program recorded in the memory 703 and executes the program. The processor 702 generates movement prediction information associated with a lane of a target vehicle based on a type of the target vehicle and location information associated with the type of the target vehicle, and controls the host vehicle based on the generated information.

The processor 702 displays the movement prediction information of the target vehicle and a target speed of the host vehicle on a display 704 or controls driving of the host vehicle to increase a performance of safety associated with the driving of the host vehicle.

In an example, display is any instrument cluster, vehicular infotainment system, screen in the vehicle, or display panel in the vehicle that performs the display function. In an example, the display is a Heads-Up Display (HUD) included in the vehicle. Other displays, such as, for example, smart phone and eye glass display (EGD) that are operatively connected to the vehicle movement prediction apparatus may be used without departing from the scope of the illustrative examples described.

Since the foregoing examples are also applicable to operations of the processor 702, the descriptions of FIGS. 1-6 are also applicable to FIG. 7, and are incorporated herein by reference. Thus, the above description may be omitted for brevity.

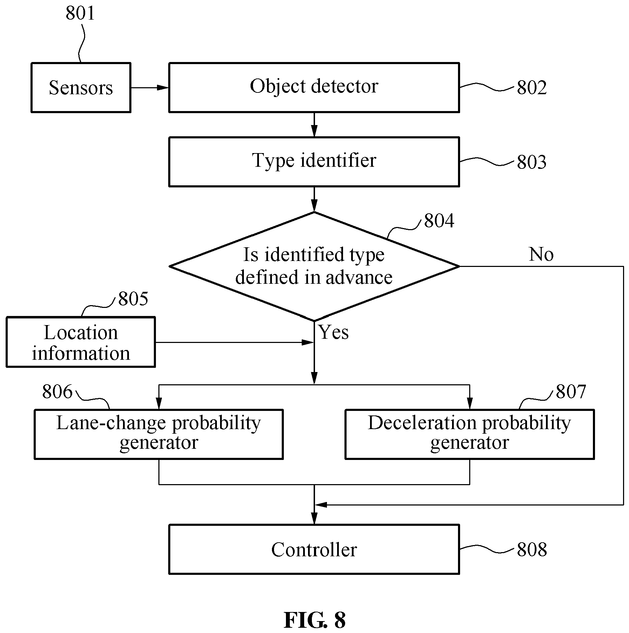

FIG. 8 illustrates an example of an operation of a vehicle movement prediction apparatus.

A vehicle movement prediction apparatus includes an object detector 802, a type identifier 803, a lane-change probability generator 806, a deceleration probability generator 807, and a controller 808. In an example, the object detector 802, the type identifier 803, the lane-change probability generator 806, the deceleration probability generator 807, and the controller 808 are implemented as, for example, a hardware module. The object detector 802 recognizes a target vehicle based on information acquired from sensors 801. In an example, the sensors 801 includes a gyro sensor, an inertial measurement unit (IMU) sensor, a camera, a radar, a lidar, a global positioning system (GPS), and other sensors. The type identifier 803 identifies a type of the target vehicle. In operation 804, the type identifier 803 determines whether the identified type is of a type that has been defined in advance. When the identified type is not defined in advance, the type identifier 803 transfers a determination result to the controller 808. The controller 808 controls the host vehicle.

When the identified type has been defined in advance, the type identifier 803 transfers information on the identified type and location information 805 associated with the identified type to the lane-change probability generator 806 and the deceleration probability generator 807. The location information 805 includes the foregoing examples such as map information.

The lane-change probability generator 806 generates a lane-change probability of the target vehicle and transfers the generated lane-change probability to the controller 808. The deceleration probability generator 807 generates a deceleration probability of the target vehicle and transfers the deceleration probability to the controller 808. The controller 808 controls the host vehicle based on the received information.

The object detector 802, type identifier 803, lane-change probability generator 806, deceleration probability generator 807, controller 808, vehicle movement prediction apparatus, vehicle movement prediction apparatus 701, driving assistance apparatus, autonomous driving control apparatus and other apparatuses, units, modules, devices, and other components described herein are implemented by hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In an example, the instructions or software includes at least one of an applet, a dynamic link library (DLL), middleware, firmware, a device driver, an application program storing the method of preventing the collision. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and providing the instructions or software and any associated data, data files, and data structures to a processor or computer so that the processor or computer can execute the instructions. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

**Claims**

1. A vehicle movement prediction method comprising:

   identifying a type of a target vehicle traveling in a target lane on a road; and
   generating movement prediction information to predict a movement of the target vehicle based on the type of the target vehicle, wherein the movement is associated with the target lane.

2. The method of claim 1, wherein identifying the type of the target vehicle includes classifying the type of the target vehicle to be one among a bus, a taxi, a garbage truck and a commuter vehicle.

3. The method of claim 1 or 2, wherein the generating of the movement prediction information comprises generating at least one of a lane-change probability or a deceleration probability of the target vehicle.

4. The method any of the previous claims, wherein generating movement prediction information to predict a movement of the target vehicle based on the type of the target vehicle is different among at least two types of target vehicles.

5. The method of any of the previous claims, further comprising:

   acquiring location information associated with the type of the target vehicle,
   wherein the generating of the movement prediction information comprises generating at least one of a lane-change probability or a deceleration probability of the target vehicle based on the type of the target vehicle and the location information.

6. The method of claim 5, wherein the lane-change probability comprises a probability of the target vehicle changing lanes, and
   the deceleration probability comprises a probability of the target vehicle decelerating and/or
   wherein the lane-change probability is based on a first probability of the target vehicle travelling in the target lane without changing lanes, a second probability of the target vehicle changing a lane from the target lane to a lane on the right, and a third probability of the target vehicle changing a lane from the target lane to a lane on the left, and/or
   wherein the method further comprises:

   identifying a host lane of a host vehicle and the target lane from one or more lanes of the road; and
   generating a target speed of the host vehicle based on the target lane, the host lane, the lane-change probability, the deceleration probability, a speed of the target vehicle, and a speed of the host vehicle.

7. The method of any of the previous claims, wherein in response to the type of the target vehicle being a bus, the generating of the movement prediction information comprises:

   acquiring any one or any combination of bus-only lane information, bus-stop location information, and bus route information of the target vehicle;
   identifying the target lane from one or more lanes of the road; and
   generating at least one of a lane-change probability or a deceleration probability of the target vehicle based on the acquired information and the identified target lane.

8. The method of claim 7, wherein the generating of the at least one of the lane-change probability or the deceleration probability comprises:

   identifying a location of a bus stop at a distance from the target vehicle based on the bus-stop location information;
   determining a lane-change direction of the target vehicle based on the identified location and the identified target lane;

generating the lane-change probability corresponding to the lane-change direction based on a distance from the target vehicle to the bus stop and the identified target lane; and

generating the deceleration probability of the target vehicle based on the distance from the target vehicle to the bus stop, and/or

wherein the generating of the at least one of the lane-change probability or the deceleration probability comprises:

predicting whether the target vehicle will turn at a crossroad connected to the road based on the bus route information;

determining a lane-change direction of the target vehicle based on a result of the predicting and the identified target lane; and

generating the lane-change probability corresponding to the lane-change direction based on a distance from the target vehicle to the crossroad and the identified target lane and/or

wherein the generating of the at least one of the lane-change probability or the deceleration probability comprises:

identifying a bus-only lane at a distance from a location of the target vehicle based on the bus-only lane information,

wherein the identifying of the bus-only lane preferably comprises determining whether the bus-only lane is in operation based on operation hours of the bus-only lane;

determining a lane-change direction of the target vehicle based on the identified bus-only lane and the identified target lane; and

generating the lane-change probability corresponding to the lane-change direction based on a distance from the target vehicle to the bus-only lane and the identified target lane.

9. The method of claim 7 or 8, wherein acquiring bus route information includes acquiring a bus route number of the target vehicle; and

wherein acquiring bus-stop location information is based on the acquired bus route number.

10. The method any of the preceding claims, wherein the generating of the movement prediction information comprises:

determining whether the target vehicle is allowed to pick up and drop off passengers or stop based on the type of the road; and

generating at least one of a lane-change probability or a deceleration probability of the target vehicle based on a result of the determining.

11. The method of claim 10, wherein in response to the type of the target vehicle being a taxi, the generating of the at least one of the lane-change probability or the deceleration probability comprises:

determining a number of times that passengers get on and off the taxi on the road,

wherein the determining of the number of times that passengers get on and off the taxi preferably comprises determining whether the road is an in-city road, a road in a commercial area, or a highway;

identifying the target lane from one or more lanes of the road;

determining a lane-change direction of the taxi changing lanes to pick up or drop off passengers based on the identified target lane;

generating the lane-change probability corresponding to the lane-change direction based on the number of times that passengers get on and off the taxi and the identified target lane; and

generating the deceleration probability of the target vehicle based on the number of times, and/or

wherein in response to the type of the target vehicle being a commuter vehicle, the generating of at least one of the lane-change probability or the deceleration probability comprises:

determining a number of times that passengers get on and off the commuter vehicle on the road,

wherein the determining of the number of times that passengers get on and off the commuter preferably comprises determining whether the road is in a residential area or a road with restrictions due to the presence of children;

identifying the target lane from one or more lanes of the road;

determining a lane-change direction of the commuter vehicle changing lanes to pick up or drop off passengers based on the identified target lane;

generating the lane-change probability corresponding to the lane-change direction based on the number of times and the identified target lane; and

generating the deceleration probability of the target vehicle based on the number of times that passengers get on and off the commuter, and/or

wherein in response to the type of the target vehicle being a garbage truck, the generating of at least one of the lane-change probability or the deceleration probability comprises:

determining a number of times that the garbage truck stops on the road.

wherein the determining of the number of times that the garbage truck stops preferably comprises determining whether the road is in a residential area or a road in a commercial area;

identifying the target lane from the one or more lanes of the road;

determining a lane-change direction of the garbage truck stopping based on the identified target lane;

generating the lane-change probability corresponding to the lane-change direction based on the number of times and the identified target lane; and

generating the deceleration probability of the target vehicle based on the number of times that the garbage truck stops.

12. A non-transitory computer-readable storage medium storing instructions that, when executed by a processor, cause the processor to perform the method any of the previous claims.

13. A vehicle movement prediction apparatus comprising:

a processor configured to identify a type of a target vehicle traveling in a target lane on a road, and to generate movement prediction information to predict a movement of the target vehicle based on the type of the target vehicle, wherein the movement is associated with the target lane.

14. The vehicle movement prediction apparatus of claim 13, wherein the processor is further configured to acquire location information associated with the type of the target vehicle, and to generate at least one of a lane-change probability or a deceleration probability based on the type of the target vehicle and the location information , and wherein the processor is preferably further configured to:

identify a host lane of a host vehicle and the target lane from one or more lanes of the road; and

generate a target speed of the host vehicle based on the target lane, the host lane, the lane-change probability, the deceleration probability, a speed of the target vehicle, and a speed of the host vehicle, and/or

wherein in response to the type of the target vehicle being a bus, the processor is further configured to:

acquire any one or any combination of bus-only lane information, bus-stop location information, and bus route information of the target vehicle;

identify the target lane from one or more lanes of the road; and

generate at least one of a lane-change probability or a deceleration probability of the target vehicle based on the acquired information and the identified target lane, and/or wherein the processor is further configured to:

determine whether the target vehicle is allowed to pick up and drop off passengers or stop based on the type of the road; and

generate at least one of a lane-change probability or a deceleration probability of the target vehicle based on a result of the determining, and/or

wherein in response to the type of the target vehicle being a taxi, the processor is further configured to:

determine a number of times that passengers get on and off the taxi on the road;

identify the target lane from one or more lanes of the road;

determine a lane-change direction of the taxi changing lanes to pick up or drop off passengers based on the identified target lane;

generate the lane-change probability corresponding to the lane-change direction based on the number of times and the identified target lane; and

generate the deceleration probability of the target vehicle based on the number of times that passengers get on and off the taxi and/or,

wherein in response to the type of the target vehicle being a commuter vehicle, the processor is further configured to:

determine a number of times that passengers get on and off the commuter vehicle on the road;
identify the target lane from one or more lanes of the road;
determine a lane-change direction of the commuter vehicle changing lanes to pick up or drop off passengers based on the identified target lane;
generate the lane-change probability corresponding to the lane-change direction based on the number of times and the identified target lane; and
generate the deceleration probability of the target vehicle based on the number of times that passengers get on and off the commuter vehicle, and/or

wherein in response to the type of the target vehicle being a garbage truck, the processor is further configured to:

determine a number of times that the garbage truck stops on the road;
identify the target lane from one or more lanes of the road;
determine a lane-change direction of the garbage truck stopping based on the identified target lane;
generate the lane-change probability corresponding to the lane-change direction based on the number of times and the identified target lane; and
generate the deceleration probability of the target vehicle based on the number of times.

**15.** A vehicle movement prediction apparatus comprising:

one or more sensor configured to detect information regarding a target vehicle a head-up display (HUD); and
a processor configured to:

recognize the target vehicle based on information acquired from the one or more sensors,
identify a type of the target vehicle, and to determine whether the identified type is defined,
predict a movement of the target vehicle based on the location information of the target vehicle, in response to the identified type of the target vehicle being defined,
control a movement of a host vehicle based on a location of the host vehicle and the predicted movement of the target vehicle, and
output the predicted movement of the target vehicle and the movement of the host vehicle through the HUD, and
wherein the vehicle movement prediction apparatus preferably further comprises a memory configured to store information detected by the sensor and location information received from a server.

**FIG. 1**

FIG. 2

**FIG. 3**

**FIG. 4**

| 1<sup>st</sup> lane 504 | 2<sup>nd</sup> lane | 3<sup>rd</sup> lane | 4<sup>th</sup> lane 503 |

Bus -only lane

505

501

502

**FIG. 5**

**FIG. 6**

Bus in 2$^{nd}$ lane
High possibility of changing lanes to the left
Target speed of host car: 62 km/h!
Reduce speed

**FIG. 7**

801

| Sensors | → | Object detector | 802 |

↓

| Type identifier | 803 |

↓

804
Is identified type
defined in advance ———— No →

805
| Location
information | →

Yes
↓

806
| Lane-change probability
generator |

807
| Deceleration probability
generator |

↓

| Controller | 808 |

**FIG. 8**

Europäisches
Patentamt

European
Patent Office

Office européen
des brevets

# EUROPEAN SEARCH REPORT

Application Number

EP 18 18 7646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2008 123454 A (DENSO CORP) 29 May 2008 (2008-05-29) * abstract; figures * * paragraphs [0006] - [0024] * | 1-15 | INV. G08G1/015 G08G1/01 G08G1/123 G08G1/16 |
| X,P | US 2018/203457 A1 (MOOSAEI MARYAM [US] ET AL) 19 July 2018 (2018-07-19) * abstract; figures * * paragraphs [0005], [0015] - [0018], [0020] - [0024], [0038] * | 1-9, 12-14 | |
| A | US 2017/154529 A1 (ZHAO YUE [US] ET AL) 1 June 2017 (2017-06-01) * abstract * * paragraph [0077] * | 1,6,12, 13,15 | |
| A | US 2012/268600 A1 (WAGNER OLIVER [DE]) 25 October 2012 (2012-10-25) * abstract * * paragraphs [0002], [0013], [0020], [0032] - [0039] * | 1,10-15 | |
| A | DE 10 2017 100029 A1 (GM GLOBAL TECH OPERATIONS LLC [US]) 6 July 2017 (2017-07-06) * abstract * * paragraphs [0002], [0003], [0012] * | 15 | TECHNICAL FIELDS SEARCHED (IPC) G08G |
| A | US 2014/142799 A1 (FERGUSON DAVID IAN FRANKLIN [US] ET AL) 22 May 2014 (2014-05-22) * abstract; figures * * paragraphs [0075] - [0085] * | 1-15 | |

The present search report has been drawn up for all claims

| Place of search | Date of completion of the search | Examiner |
|---|---|---|
| The Hague | 4 March 2019 | Roost, Joseph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 18 7646

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2019

| Patent document cited in search report | | | Publication date | Patent family member(s) | | | Publication date |
|---|---|---|---|---|---|---|---|
| JP | 2008123454 | A | 29-05-2008 | JP | 4692898 | B2 | 01-06-2011 |
| | | | | JP | 2008123454 | A | 29-05-2008 |
| US | 2018203457 | A1 | 19-07-2018 | CN | 108305478 | A | 20-07-2018 |
| | | | | DE | 102018100154 | A1 | 19-07-2018 |
| | | | | GB | 2560609 | A | 19-09-2018 |
| | | | | US | 2018203457 | A1 | 19-07-2018 |
| US | 2017154529 | A1 | 01-06-2017 | BR | 112018010601 | A2 | 13-11-2018 |
| | | | | CA | 3006546 | A1 | 08-06-2017 |
| | | | | CN | 108292475 | A | 17-07-2018 |
| | | | | EP | 3385930 | A1 | 10-10-2018 |
| | | | | JP | WO2017094656 | A1 | 06-09-2018 |
| | | | | KR | 20180072801 | A | 29-06-2018 |
| | | | | US | 2017154529 | A1 | 01-06-2017 |
| | | | | WO | 2017094656 | A1 | 08-06-2017 |
| US | 2012268600 | A1 | 25-10-2012 | DE | 102011018157 | A1 | 25-10-2012 |
| | | | | US | 2012268600 | A1 | 25-10-2012 |
| DE | 102017100029 | A1 | 06-07-2017 | CN | 106952471 | A | 14-07-2017 |
| | | | | DE | 102017100029 | A1 | 06-07-2017 |
| | | | | US | 2017190334 | A1 | 06-07-2017 |
| US | 2014142799 | A1 | 22-05-2014 | CN | 104271420 | A | 07-01-2015 |
| | | | | EP | 2825435 | A1 | 21-01-2015 |
| | | | | JP | 2015516623 | A | 11-06-2015 |
| | | | | KR | 20140135828 | A | 26-11-2014 |
| | | | | US | 8457827 | B1 | 04-06-2013 |
| | | | | US | 2013261872 | A1 | 03-10-2013 |
| | | | | US | 2014142799 | A1 | 22-05-2014 |
| | | | | WO | 2013138000 | A1 | 19-09-2013 |

EPO FORM P0459

For more details about this annex : see Official Journal of the European Patent Office, No. 12/82